# NEUE EUROPÄISCHE PATENTSCHRIFT

(11) **EP 2 481 460 B2**
(45) Veröffentlichungstag und Bekanntmachung des Hinweises auf die Entscheidung über den Einspruch: **24.05.2017**
(45) Hinweis auf die Patenterteilung: 14.05.2014
(21) Anmeldenummer: 12152271.8
(22) Anmeldetag: 24.01.2012
(51) Int. Cl.: B01D 29/11

(54) **Filterelement eines Flüssigkeitsfilters und Flüssigkeitsfilter**
Filter element of a liquid filter and liquid filter
Elément de filtration d'un filtre à liquide et filtre à liquide

(30) Priorität: 01.02.2011 DE 102011010076
(43) Veröffentlichungstag der Anmeldung: 01.08.2012
(73) Patentinhaber: Mann + Hummel GmbH, 71638 Ludwigsburg (DE)
(72) Erfinder: Zhu, Yihao, 71640 Ludwigsburg (DE); Loos, Rainer, 71691 Freiberg (DE); Nageldinger, Bernd, 71679 Asperg (DE); Schwarz, Holger, 48165 Münster (DE); Straßenberger, Norbert, 84166 Adlkofen (DE)
(74) Vertreter: Kohler Schmid Möbus Patentanwälte

(56) Entgegenhaltungen:
- DE-A1-102009 015 094
- US-A- 5 753 120
- US-A1- 2007 170 103
- US-A1- 2007 181 481
- US-A1- 2009 127 198

## Beschreibung

### Technisches Gebiet

Die Erfindung betrifft ein Filterelement eines Flüssigkeitsfilters, insbesondere für Kraftstoff, Öl oder Wasser, insbesondere einer Brennkraftmaschine, insbesondere eines Kraftfahrzeugs, das in einem wenigstens zweiteiligen Gehäuse des Flüssigkeitsfilters angeordnet werden kann, derart, dass es wenigstens einen Einlass des Gehäuses für zu filtrierende Flüssigkeit vom einem Auslass des Gehäuses für filtrierte Flüssigkeit trennt, mit einem Filtermedium und mit wenigstens einer Endscheibe, die mit dem Filtermedium verbunden ist und die einen Dichtungsträger für eine radial äußere Ringdichtung aufweist, die in einem Einspannbereich zwischen zwei voneinander trennbaren Gehäuseteilen des Gehäuses eingespannt werden kann.

Ferner betrifft die Erfindung einen Flüssigkeitsfilter insbesondere für Kraftstoff, Öl oder Wasser insbesondere einer Brennkraftmaschine insbesondere eines Kraftfahrzeugs, mit einem Gehäuse, welches aus wenigstens zwei voneinander trennbaren Gehäuseteilen zusammengesetzt ist und das wenigstens einen Einlass für zu filtrierende Flüssigkeit und wenigstens einen Auslass für filtrierte Flüssigkeit aufweist, und mit einem Filterelement, welches in dem Gehäuse des Flüssigkeitsfilters angeordnet ist, derart, dass es den Einlass vom dem Auslass des Gehäuses trennt, mit einem Filtermedium und mit wenigstens einer Endscheibe, die mit dem Filtermedium verbunden ist und die einen Dichtungsträger für eine radial äußere Ringdichtung aufweist, die in einem Einspannbereich zwischen den Gehäuseteilen des Gehäuses eingespannt ist.

### Stand der Technik

Bei einem vom Markt her bekannten Flüssigkeitsfilter ist ein zickzackförmig gefaltetes Filtermedium zwischen zwei Endscheiben angeordnet. Eine der beiden Endscheiben weist am radial äußeren Rand einen Dichtungsträger auf, welcher über eine nach radial außen offene Nut für eine Ringdichtung aus einem Elastomer verfügt. Die Ringdichtung ist zwischen zwei Gehäuseteilen eines Filtergehäuses eingespannt und dichtet damit die Bereiche zwischen dem Filtergehäuse und dem Filtersystem ab. Zur Montage muss die Ringdichtung radial von außen in die Haltenut eingeführt werden Hierzu muss die Ringdichtung etwas gedehnt werden. Die DE 10 2009 015094 A1 offenbart ein zylindrisches Filterelement mit zwei fest mit dem Filterelement verbundenen Endscheiben. Eine der Endscheiben trägt zwei Dichtungen und ist zweistückig ausgeführt. Die Dichtungen sind dreiseitigen gekammert und weisen jeweils nur eine radial nach innen bzw. nach außen gerichtete Dichtungsfläche auf. Die Dokumente US 2009/1 27198 A1, US 2007/181481 A1, US 5753 120 A beschreiben Filterelemente, die einen endscheibenseitigen Dichtungsträger für eine radial äußere Ringdichtung aufweisen. Die Ringdichtungen können zwischen zwei voneinander trennbaren Gehäuseteilen des Gehäuses eingespannt werden.

Der Erfindung liegt die Aufgabe zugrunde, ein Filterelement und einen Flüssigkeitsfilter der eingangs genannten Art zu gestalten, bei dem die Ringdichtung möglichst einfach am Dichtungsträger montiert werden kann. Außerdem soll die Ringdichtung mit einem möglichst geringen Materialaufwand realisiert werden können.

### Offenbarung der Erfindung

Diese Aufgabe wird erfindungsgemäß dadurch gelöst, dass der Dichtungsträger in axialer Richtung wenigstens zweiteilig ist mit einem Grundkörper, der fest mit der Endscheibe verbunden ist, und einem Deckkörper, der an der Endscheibe und/oder dem Grundkörper befestigt ist, und die Ringdichtung zwischen dem Grundkörper und dem Deckkörper eingelegt ist.

"Axial" und "radial" im Sinne der Erfindung beziehen sich auf eine gedachte Dreh- und/oder Steckachse des Flüssigkeitsfilters, in deren Richtung das Filterelement in das Gehäuse eingebracht und aus diesem heraus genommen werden kann.

Erfindungsgemäß ist ein Grundkörper des Dichtungsträgers fest mit der Endscheibe verbunden. Auf diesen Grundkörper ist die Ringdichtung einfach in axialer Richtung aufgelegt, ohne dass ein Dehnen und Einfädeln der Ringdichtung erforderlich ist, wie dies bei den bekannten Flüssigkeitsfilter der Fall ist. Der Deckkörper ist in axialer Richtung auf den Grundkörper aufgelegt und an der Endscheibe und/oder dem Grundkörper fixiert, so dass die Ringdichtung zwischen dem Grundkörper und dem Deckkörper gehalten ist. Der axiale Einbau der Ringdichtung in axialer Richtung ermöglicht eine flexible Formgebung derselben. Insbesondere kann ein Halteabschnitt der Ringdichtung, der zwischen dem Deckkörper und dem Grundkörper gehalten wird, eine minimale Ausdehnung in axialer Richtung aufweisen, wodurch Material gespart wird.

Bei einer vorteilhaften Ausführungsform kann der Grundkörper ein Grundkörperhalteringprofil aufweisen mit einem Grundkörperhalteabschnitt, der zum Deckkörper zeigt, der Deckkörper kann ein Deckkörperhalteringprofil mit einem Deckkörperhalteabschnitt aufweisen, der zum Grundkörper zeigt, und der Grundkörperhalteabschnitt und der Deckkörperhalteabschnitt können einen Halteabschnitt der Ringdichtung zangenartig umgreifen. Durch den zangenartigen Aufbau wird die Ringdichtung optimal in dem Grundkörper und dem Deckkörper gehalten und fixiert. Vorteilhafterweise kann der Halteabschnitt so ausgestaltet sein, dass er dort, wo der Grundkörperhalteabschnitt und der Deckkörperhalteabschnitt angreifen, verjüngt ist. Auf diese Weise wird verhindert, dass der Halteabschnitt in radialer Richtung verrutschen oder gar radial nach außen aus der zangenartigen Umgreifung herausrutschen kann. Dadurch, dass die Ringdichtung in axialer Richtung auf den Grundkörper aufgelegt wird, kann die Ausdehnung des Halteabschnitts der Ringdichtung in radialer Richtung größer gewählt werden, als bei der aus dem Stand der Technik bekannten Flüssigkeitsfilter, bei dem die Ringdichtung gedehnt werden muss, um sie radial von außen in die Haltenut einführen zu können. Eine Überlappung des Halteabschnitts in radialer Richtung mit dem Dichtungsträger kann entsprechend größer gewählt werden, so dass der Halteabschnitt bei gleicher Belastbarkeit im Gegenzug in axialer Richtung entsprechend dünner sein kann, was zu einer Materialersparnis führt. Vorteilhafterweise können der Abstand zwischen dem Grundkörperhalteabschnitt und dem Deckkörperhalteabschnitt und die axiale Ausdehnung des Halteabschnitts so aneinander angepasst sein, dass sich die Ringdichtung in Umfangsrichtung innerhalb bestimmter Grenzen bewegen kann. Auf diese Weise können Bewegungen des Filterelements insbesondere infolge von Druckschwankungen in dem Gehäuse ausgeglichen werden. Außerdem wird durch die so erreichte Lagetoleranz der Ringdichtung der Einbau des Filterelements in das Gehäuse vereinfacht. Vorteilhafterweise kann das Deckkörperhalteringprofil über speichenartig angeordnete Verbindungsabschnitte mit einem radial inneren Befestigungsringabschnitt verbunden sein, der zur Befestigung des Deckkörpers an der Endscheibe und/oder dem Grundkörper befestigt ist. Mit dem Befestigungsringabschnitt kann der Deckkörper einfach und fest mit der Endscheibe und/oder dem Grundkörper verbunden werden. Die speichenartige Anordnung der Verbindungsabschnitte ist stabil und dennoch elastisch, so dass insbesondere durch Druckschwankungen im Flüssigkeitsfilter hervorgerufene Bewegungen des Filterelements im Gehäuse einfach kompensiert werden können. Außerdem kann Flüssigkeit ohne Druckverlust zwischen den Verbindungsabschnitten hindurch fließen. Im Übrigen kann die speichenartige Anordnung materialoptimiert und gewichtsoptimiert realisiert werden.

Vorteilhafterweise kann der Deckkörper zwischen dem Deckkörperhalteringprofil und dem Befestigungsringabschnitt wenigstens einen insbesondere ringförmigen Stützabschnitt zur Abstützung der Verbindungsabschnitte gegen die Endscheibe aufweisen. Mit dem Stützabschnitt wird der Deckkörper in axialer Richtung abgestützt und in Form und Lage stabilisiert. Der Stützabschnitt kann vorteilhaft an der Endscheibe fixiert sein, so dass die Stabilität der Verbindung des Deckkörpers mit der Endscheibe verbessert wird. Eine derartige zusätzliche Fixierung des Deckkörpers an der Endscheibe hat ferner den Vorteil, dass die zangenartige Umgreifung der Ringdichtung mit dem Grundkörperhalteabschnitt und dem Deckkörperhalteabschnitt verbessert wird. Die Presskraft, die beim zangenartigen Umgreifen auf den Halteabschnitt der Ringdichtung wirken, kann so besser definiert werden. Der Abstand des Grundkörperhalteabschnitts und des Deckkörperhalteabschnitt kann besser konstant gehalten werden, so dass der Halteabschnitt bei einer optimal vorgegebenen Presskraft nicht aus dieser Umgreifung herausrutschen kann.

Bei einer weiteren vorteilhaften Ausführungsform kann der Deckkörper, insbesondere der Befestigungsringabschnitt, eine Aufnahme für eine radial innere Ringdichtung wenigstens mit bilden. Vorteilhafterweise kann der Befestigungsringabschnitt einen Deckabschnitt aufweisen, welcher eine Aufnahme für die radial innere Ringdichtung in einem entsprechenden Stutzen der Endscheibe oder des Grundkörpers in axialer Richtung begrenzt. Dies hat den Vorteil, dass auch die radial innere Ringdichtung einfach ohne eine Verformung desselben in axialer Richtung in die Aufnahme eingelegt werden kann und nach dem Anbau des Deckkörpers dort gehalten wird.

Vorteilhafterweise kann der Deckkörper mittels einer Rastverbindung, einer Dreh-und/oder Steckverbindung, insbesondere einer Schraub- oder Bajonettverbindung, einer Klebeverbindung oder eine Schweißverbindung an der Endscheibe und/oder dem Grundkörper befestigt sein. Eine Rastverbindung und eine Dreh- und/oder Steckverbindung können einfach ohne Werkzeuge geschlossen werden. Eine Rastverbindung kann darüber hinaus so ausgestaltet sein kann, dass beim Zusammenbau der Bauteile deren Orientierung relativ zueinander nicht beachtet werden muss. Dreh- und/oder Steckverbindungen sind stabil und können einfach auch wieder gelöst werden. Klebeverbindungen und Schweißverbindungen sind langfristig robust. Die Anforderungen an die Formgebung der Verbindungsflächen sind bei Klebe- und Schweißverbindungen geringer als bei der Rastverbindung und der Druck- und/oder Steckverbindung.

Die Aufgabe wird ferner mit dem Flüssigkeitsfilter erfindungsgemäß dadurch gelöst, dass der Dichtungsträger in axialer Richtung wenigstens zweiteilig ist mit einem Grundkörper, der fest mit der Endscheibe verbunden ist, und einem Deckkörper, der an der Endscheibe und/oder dem Grundkörper befestigt ist, und die Ringdichtung zwischen dem Grundkörper und dem Deckkörper eingelegt ist. Die oben im Zusammenhang mit dem erfindungsgemäßen Filterelement aufgezeigten Merkmale und Vorteile gelten für den erfindungsgemäßen Flüssigkeitsfilter entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

Es zeigen
- Figur 1: schematisch einen isometrischen Schnitt eines Kraftstofffilters einer Brennkraftmaschine im Bereich eines Gehäusedeckels, wobei eine Ringdichtung eines Filterelements zwischen dem Gehäusedeckel und einem Gehäusetopf eingespannt ist;
- Figur 2: schematisch einen isometrischen Schnitt des Filterelements des Kraftstofffilters aus der Figur 1 im Bereich der Ringdichtung;
- Figur 3: schematisch eine isometrische Darstellung des Filterelements aus der Figur 2.

In den Figuren sind gleiche Bauteile mit gleichen Bezugszeichen versehen.

### Ausführungsform(en) der Erfindung

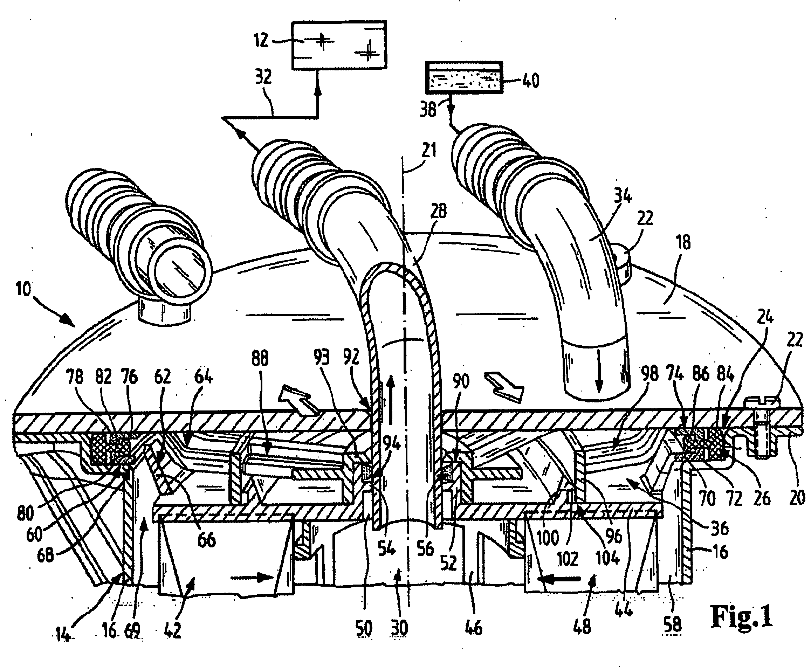

In der Figur 1 ist ein Ausschnitt eines Kraftstofffilters 10 einer angedeuteten Brennkraftmaschine 12 eines Kraftfahrzeugs gezeigt.

Der Kraftstofffilter 10 verfügt über ein zweiteiliges Filtergehäuse 14, welches aus einem becherförmigen Gehäusetopf 16 und einem Gehäusedeckel 18 zusammengesetzt ist. Der dem Gehäusedeckel 18 zugewandte Rand des Gehäusetopfs 16 ist mehrfach abgestuft und zu einem sich radial nach außen erstreckenden Anschlussflanschbereich 20 ausgebildet. "Radial" und "axial" beziehen sich hier und im folgenden auf eine virtuelle Montageachse 21 in deren Richtung ein Filterelement 42 in das Filtergehäuse 14 eingesteckt und aus diesem heraus gezogen werden kann. Am Anschlussflanschbereich 20 ist der Gehäusedeckel 18 mittels einer Mehrzahl von Schrauben 22, welche in Umfangsrichtung gleichmäßig verteilt sind, befestigt.

Radial innerhalb des Anschlussflanschbereichs 20 begrenzt der abgestufte Rand des Gehäusetopfs 16 einen Einspannbereich 24 für eine radial äußere Ringdichtung 26.

Koaxial zum Montageachse 21 führt ein Auslassrohr 28 für filtrierten Kraftstoff durch den Gehäusedeckel 18 in einen reinseitigen Innenraum 30 des Filtergehäuses 14. Das Auslassrohr 28 ist über eine erste Kraftstoffleitung 32 mit der Brennkraftmaschine 12 verbunden.

Ein Einlassrohr 34 für zu filtrierenden Kraftstoff führt exzentrisch und radial innerhalb des Einspannbereichs 24 durch den Gehäusedeckel 18 in einen rohseitigen Einlassringraum 36 des Filtergehäuses 14. Das Einlassrohr 34 ist über eine zweite Kraftstoffleitung 38 mit einem Kraftstofftank 40 verbunden. In der zweiten Kraftstoffleitung 38 ist eine in der Figur 1 nicht gezeigte, hier nicht weiter interessierende Kraftstoffpumpe angeordnet.

In dem Filtergehäuse 14 ist das Filterelement 42 angeordnet, derart, dass es eine Öffnung des Einlassrohrs 34 von einer Öffnung des Auslassrohrs 28, also den reinseitigen Innenraum 30 vom rohseitigen Einlassraum 36, trennt.

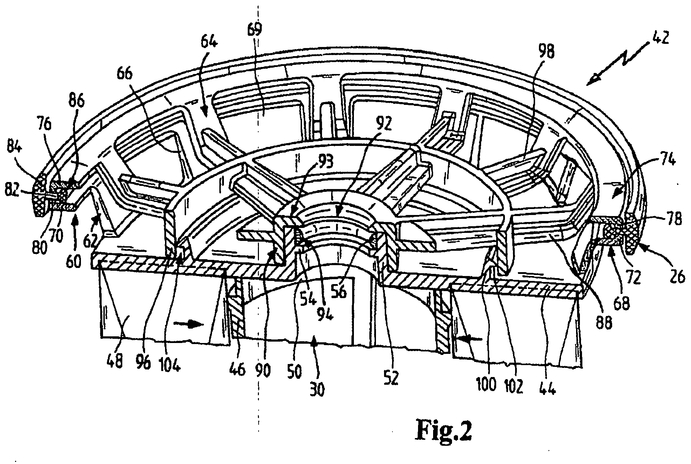

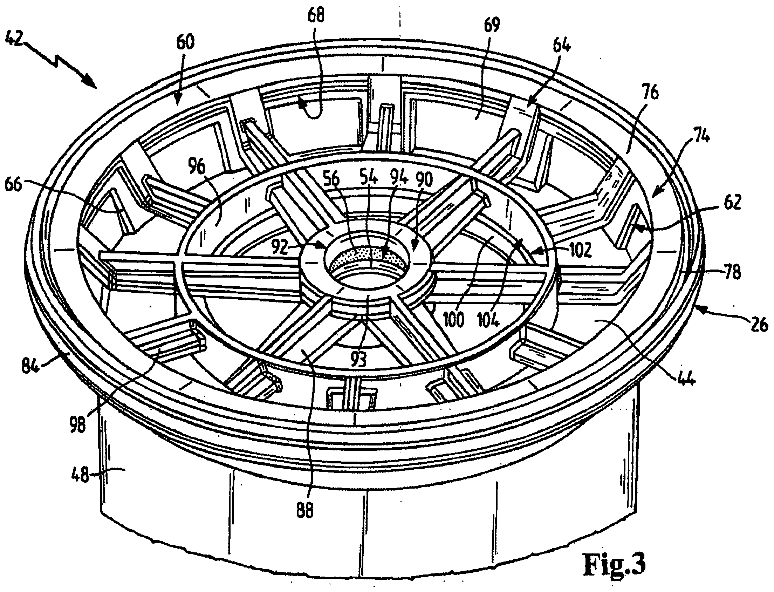

Das Filterelement 42 umfasst, wie auch in den Figuren 2 und 3 gezeigt, eine dem Gehäusedeckel 18 zugewandte erste Endscheibe 44, eine nicht gezeigte zweite Endscheibe, die einem ebenfalls nicht gezeigten Boden des Filtergehäuses 10 zugewandt ist. Ein skelettartiges Mittelrohr 46 erstreckt sich zwischen der ersten Endscheibe 44 und der zweiten Endscheibe. Das Mittelrohr 46 ist von einem Filtermedium 48 in Form eines Filterbalges aus zickzackförmig gefaltetem Vlies umgeben. Das Mittelrohr 46 begrenzt den reinseitigen Innenraum 30 des Filtermediums 48.

Die Endscheibe 44 weist eine zum Mittelrohr 46 konzentrische Auslassöffnung 50 auf. Die Auslassöffnung 50 ist auf der dem Gehäusedeckel 18 zugewandten Seite mit einem hohlzylindrischen Verbindungsstutzen 52 umgeben. In dem Verbindungsstutzen 52 steckt das koaxiale Auslassrohr 28.

Auf seiner radial inneren Umfangsseite weist der Verbindungsstutzen 52 eine sich radial nach innen erstreckende Dichtringstufe 54 auf. An der Dichtringstufe 54 liegt eine O-Ringdichtung 56 an, welche sich gegen den Innenmantel des Verbindungsstutzens 52 und gegen den Außenmantel des Auslassrohrs 28 dicht abstützt.

Das Filtermedium 48 ist von einem Einlassringraum 58 umgeben, welcher über den rohseitigen Einlassraum 36 mit dem Einlassrohr 34 in Verbindung steht. Das Filtermedium 48 kann von dem zu filternden Kraftstoff radial von außen nach innen vom Einlassringraum 58 zum Innenraum 30 durchströmt werden.

Die Endscheibe 44 und damit das Filterelement 42 sind mit einem Dichtungsträger 60 und der Ringdichtung 26 im Filtergehäuse 14 gehalten.

Der Dichtungsträger 60 ist zweiteilig und umfasst einen Grundkörper 62 und einen Deckkörper 64.

Der Grundkörper 62 weist eine Mehrzahl von Stützen 66 auf, mit denen ein Grundkörperhalteringprofil 68 einstückig mit der Endscheibe 44 verbunden ist. Zwischen den

Stützen 66 werden Verbindungskanäle 69 realisiert, die den Einlassraum 36 mit dem Einlassringraum 58 verbinden.

Der Grundkörperhalteringprofil 68 hat ein L-förmiges Profil. Ein Grundschenkelabschnitt 70 des Grundkörperhalteringprofils 68 erstreckt sich etwa parallel zur Endscheibe 44 und geht an seiner radial inneren Seite in die Stützen 66 über. An der radial äußeren Seite des Grundschenkelabschnitts 70 schließt sich ein Grundkörperhalteabschnitt 72 an. Der Grundkörperhalteabschnitt 72 erstreckt sich axial zur Montageachse 21 und zeigt von der Endscheibe 44 weg.

Der Deckkörper 64 weist einen Deckelkörperhalteringprofil 74 mit einem ebenfalls L-förmigen Profil auf. Ein Deckschenkelabschnitt 76 des Deckkörperhalterings 74 verläuft parallel zum Grundschenkelabschnitt 70 des Grundkörperhalteringprofils 68. Radial außen geht der Deckschenkelabschnitt 76 in einen Deckkörperhalteabschnitt 78 über, welcher sich in axialer Richtung zum Grundkörperhalteringprofil 68 hin erstreckt. In axialer Richtung betrachtet fluchten der Deckkörperhalteabschnitt 78 und der Grundkörperhalteabschnitt 72.

Die freien Ränder des Deckkörperhalteabschnitts 78 und des Grundkörperhalteabschnitts 72 begrenzen einen Spalt 80. In dem Spalt 80 befindet sich ein Halteabschnitt 82 der Ringdichtung 26. Der Grundkörperhalteabschnitt 72 und der Deckkörperhalteabschnitt 78 umgreifen den Halteabschnitt 82 zangenartig.

Der Halteabschnitt 82 befindet sich auf der radial inneren Seite der Ringdichtung 26. Er geht radial außen in einen Dichtungsabschnitt 84 über, der im Profil etwa halbmondförmig ist. Die Ausdehnung des Dichtungsabschnitts 84 in axialer Richtung ist größer als die Ausdehnung des Halteabschnitts 82 in radialer Richtung. Der Dichtungsabschnitt 84 befindet sich radial außerhalb des Grundkörperhalteabschnitts 72 und des Deckkörperhalteabschnitts 78. Mit seiner radial inneren Seite liegt der Dichtungsabschnitt 84 beidseitig des Spaltes 80 an dem Grundkörperhalteabschnitt 72 und dem Deckkörperhalteabschnitt 78 an. Radial innerhalb der zangenartigen Umgreifung des Grundkörperhalteabschnitts 72 und des Deckkörperhalteabschnitts 78 weist der Halteabschnitt 82 eine Verdickung 86 in axialer Richtung auf. Die zangenartige Umgreifung befindet sich radial zwischen der Verdickung 86 und dem Dichtungsabschnitt 84. Die Ausdehnung der Verdickung 86 in axialer Richtung ist deutlich größer als die axiale Ausdehnung des Spaltes 80 und verhindert, dass die Ringdichtung 26 in radialer Richtung aus der Umgreifung herausrutschen kann.

Radial innen ist der Deckelkörperhalteringprofil 74 einstückig mit einer Mehrzahl von speichenartig angeordneten Verbindungsabschnitten 88 verbunden. Die Verbindungsabschnitte 88 führen zu einem radial inneren Befestigungsringabschnitt 90 des Deckkörpers 64 und sind einstückig mit diesem verbunden. Der Befestigungsringabschnitt 90 hat etwa die Form eines Bechers, dessen offene Seite zur Endscheibe 44 gerichtet ist. In seinem Boden weist der Befestigungsringabschnitt 90 eine Durchstecköffnung 92 auf, durch die das Auslassrohr 28 hindurchführt. Der Befestigungsringabschnitt 90 ist mit seiner offenen Seite über den Verbindungsstutzen 52 gesteckt. Ein die Durchstecköffnung 92 radial außen umgebender Ringscheibenabschnitt 93 des Bodens des Befestigungsabschnitts 90 überragt den Verbindungsstutzen 52 radial innen und bildet so eine Begrenzung einer Aufnahme, insbesondere einer Dichtungsaufnahme 94, für die O-Ringdichtung 56. Die Dichtungsaufnahme 94 wird außerdem begrenzt durch die Dichtungsringstufe 54 und der zwischen dieser und dem Ringscheibenabschnitt 93 befindlichen radial inneren Umfangswand des Verbindungsstutzens 52.

Der Deckkörper 64 weist radial zwischen dem Deckelkörperhalteringprofil 74 und dem Befestigungsringabschnitt 90 einen hohlzylindrischen Stützabschnitt 96 auf, der einstückig mit den Verbindungsabschnitten 88 verbunden ist. In Umfangsrichtung zwischen jeweils zwei der Verbindungsabschnitte 88 führt jeweils ein Verbindungszwischenabschnitt 98 von dem Stützabschnitt 96 zum Deckelkörperhalteringprofil 74. Der Stützabschnitt 96 liegt mit einem Rand an der Außenseite der Endscheibe 44 an. Radial innerhalb des Stützabschnitts 96 ist an die Außenseite der Endscheibe 44 ein hohlzylindrischer Rasthakenring 100 angeformt. Am freien Rand des Rasthakenrings 100 ist radial außen ein umlaufender Rasthaken 102 ausgebildet. Im montierten Zustand krallt sich der Rasthaken 102 in die radial innere Umfangswand des Stützabschnitts 96, so dass eine Rastverbindung 104 zwischen dem Deckkörper 64 und der Endscheibe 44 realisiert wird.

Zur Montage des Kraftstofffilters 10 wird die Endscheibe 44 mit dem Grundkörper 62 getrennt von dem Deckkörper 64 hergestellt.

Die obere Endscheibe 44 und die untere Endscheibe werden mit dem gefalteten Filtermedium 48 und dem Mittelrohr 46 verbunden.

Die Ringdichtung 26 und die O-Ringdichtung 56 werden ebenfalls separat hergestellt. Die O-Ringdichtung 56 wird in axialer Richtung von außen in die Dichtungsaufnahme 94 eingelegt.

Die Ringdichtung 26 wird in axialer Richtung in den Grundkörperhalteringprofil 68 eingelegt, derart, dass sich die Verdickung 86 des Halteabschnitts 82 radial innerhalb des Grundkörperhalteabschnitts 72 befindet und der Dichtungsabschnitt 84 radial außerhalb desselbigen ist.

Anschließend wird der Deckkörper 64 in axialer Richtung mit der offenen Seite des Befestigungsringabschnitts 90 voraus auf dem Grundkörper 62 montiert. Dabei werden der Befestigungsringabschnitt 90 auf den Verbindungsstutzen 52 und der Stützabschnitt 96 auf den Rasthakenring 100 gesteckt. Der Rasthaken 102 krallt sich in die radial innere Wand des Stützabschnitts 96, so dass der Deckkörper 64 an der Endscheibe 44 befestigt ist. Der Deckkörperhalteabschnitt 78 des Deckelkörperhalteringprofils 74 greift in axialer Richtung an dem Halteabschnitt 82 der Ringdichtung 26 an, so dass diese fest an dem Dichtungsträger 60 zwischen dem Grundkörperhalteabschnitt 72 und dem Deckkörperhalteabschnitt 78 gehalten wird. Der Boden des Befestigungsringabschnitt 90 schließt die Dichtungsaufnahme 94 ab, so dass die O-Ringdichtung 46 in dieser gehalten wird.

Das Filterelement 42 wird nun in axialer Richtung soweit in den Gehäusetopf 16 des Filtergehäuses 14 eingesteckt, bis die der Endscheibe 44 zugewandten Seiten des Grundkörperhalteringprofils 68 und des Dichtungsabschnitts 84 der Ringdichtung 26 an der topfseitigen Stufe des Einspannbereichs 24 anliegen.

Dann wird der Gehäusedeckel 18 in axialer Richtung auf den Gehäusetopf 16 montiert, wobei das Auslassrohr 28 durch die Durchstecköffnung 92 und die Auslassöffnung 50 gesteckt wird. Die O-Ringdichtung 56 dichtet nun die Auslassöffnung 50 gegen das Auslassrohr 28 ab. Der Dichtungsabschnitt 84 der Ringdichtung 26 wird dicht zwischen dem Gehäusedeckel 18 und der Stufe des Einspannbereichs 24 des Gehäusetopfs 16 eingespannt, wobei sich der Dichtungsabschnitt 84 elastisch verformt.

Der Gehäusedeckel 18 wird mit den Schrauben 22 am Gehäusetopf 16 fixiert.

Bei dem oben beschriebenen Ausführungsbeispiel eines Kraftstofffilters 10 und eines Filterelements 42 sind unter anderem folgende Modifikationen möglich:
Die Erfindung ist nicht beschränkt auf Kraftstofffilter von Brennkraftmaschinen von Kraftfahrzeugen. Vielmehr kann sie auch bei andersartigen Flüssigkeitsfiltern, beispielsweise Ölfiltern oder Wasserfiltern, auch außerhalb der Kraftfahrzeugtechnik, eingesetzt werden. Die Erfindung kann ebenso bei Industriemotoren eingesetzt werden.

Anstelle der Verbindungsabschnitte 88 kann auch eine andersartige Verbindung zwischen dem Deckelkörperhalteringprofil 74 und dem Befestigungsringabschnitt 90 vorgesehen sein.

Der Dichtungsträger 60 kann auch so ausgestaltet sein, dass er lediglich die radial äußere Ringdichtung 26 trägt. Die innere O-Ringdichtung 56 kann separat gehalten werden.

Der Deckkörper 64 kann zusätzlich oder alternativ zu der Rastverbindung 104 mit der Endscheibe 44 auch eine entsprechende Fixierung an dem Grundkörper 62 aufweisen. Der Stützabschnitt 96 kann statt geschlossen umlaufend auch aus separaten Segmente bestehen.

Anstelle der Rastverbindung 104 kann auch eine andersartige lösbare oder nicht lösbare Verbindung mit der Endscheibe 44, beispielsweise eine Dreh- und/oder Steckverbindung, insbesondere eine Schraubverbindung oder eine bajonettartige Verbindung, eine Klebeverbindung oder eine Schweißverbindung, vorgesehen sein.

Die Ringdichtung 26 kann auch ein anderes Profil aufweisen, beispielsweise kann auch auf die Verdickung 86 verzichtet werden.

## Patentansprüche

1. Filterelement (42) eines Flüssigkeitsfilters (10), insbesondere für Kraftstoff, Öl oder Wasser, insbesondere einer Brennkraftmaschine (12), insbesondere eines Kraftfahrzeugs, das in einem wenigstens zweiteiligen Gehäuse (16, 18) des Flüssigkeitsfilters (10) angeordnet werden kann, derart, dass es wenigstens einen Einlass (34) des Gehäuses (16, 18) für zu filtrierende Flüssigkeit von einem Auslass (28) des Gehäuses (16, 18) für filtrierte Flüssigkeit trennt, mit einem Filtermedium (48) und mit wenigstens einer Endscheibe (44), die mit dem Filtermedium (48) verbunden ist und die einen Dichtungsträger (60) für eine radial äußere Ringdichtung (26) aufweist, die in einem Einspannbereich (24) zwischen zwei voneinander trennbaren Gehäuseteilen (16, 18) des Gehäuses eingespannt werden kann, wobei der Dichtungsträger (60) in axialer Richtung wenigstens zweiteilig ist mit einem Grundkörper (62), der fest mit der Endscheibe (44) verbunden ist, und einem Deckkörper (64), der an der Endscheibe (44) und/oder dem Grundkörper (62) befestigt ist, und die Ringdichtung (26) zwischen dem Grundkörper (62) und dem Deckkörper (64) eingelegt ist, wobei der Grundkörper (62) ein Grundkörperhalteringprofil (68) aufweist mit einem Grundkörperhalteabschnitt (72), der zum Deckkörper (64) zeigt, der Deckkörper (64) ein Deckkörperhalteringprofil (74) mit einem Deckkörperhalteabschnitt (78) aufweist, der zum Grundkörper (62) zeigt, und der Grundkörperhalteabschnitt (72) und der Deckkörperhalteabschnitt (78) einen Halteabschnitt (82) der Ringdichtung (26) zangenartig umgreifen.

2. Filterelement nach Anspruch 1, **dadurch gekennzeichnet, dass** das Deckkörperhalteringprofil (74) über speichenartig angeordnete Verbindungsabschnitte (88) mit einem radial inneren Befestigungsringabschnitt (90) verbunden ist, der zur Befestigung des Deckkörpers (64) an der Endscheibe (44) und/oder dem Grundkörper befestigt ist.

3. Filterelement nach Anspruch 2, **dadurch gekennzeichnet, dass** der Deckkörper (64) zwischen dem Deckkörperhalteringprofil (74) und dem Befestigungsringabschnitt (90) wenigstens einen insbesondere ringförmigen Stützabschnitt (96) zur Abstützung der Verbindungsabschnitte (88) gegen die Endscheibe (44) aufweist.

4. Filterelement nach einem der vorigen Ansprüche, **dadurch gekennzeichnet, dass** der Deckkörper (64), insbesondere der Befestigungsringabschnitt (90), eine Aufnahme (94) für eine radial innere Ringdichtung (56) wenigstens mit bildet.

5. Filterelement nach einem der vorigen Ansprüche, **dadurch gekennzeichnet, dass** der Deckkörper (64) mittels einer Rastverbindung (104), einer Dreh- und/oder Steckverbindung, insbesondere einer Schraub- oder Bajonettverbindung, einer Klebeverbindung oder eine Schweißverbindung an der Endscheibe (44) und/oder dem Grundkörper befestigt ist.

6. Flüssigkeitsfilter (10) insbesondere für Kraftstoff, Öl oder Wasser insbesondere einer Brennkraftmaschine (12) insbesondere eines Kraftfahrzeugs, mit einem Gehäuse (16, 18), welches aus wenigstens zwei voneinander trennbaren Gehäuseteilen (16, 18) zusammengesetzt ist und das wenigstens einen Einlass (34) für zu filtrierende Flüssigkeit und wenigstens einen Auslass (28) für filtrierte Flüssigkeit aufweist, und mit einem Filterelement (42), welches in dem Gehäuse (16, 18) des Flüssigkeitsfilters (10) angeordnet ist, derart, dass es den Einlass (34) von der Auslass (28) des Gehäuses (16, 18) trennt, mit einem Filtermedium (48) und mit wenigstens einer Endscheibe (44), die mit dem Filtermedium (48) verbunden ist und die einen Dichtungsträger (60) für eine radial äußere Ringdichtung (26) aufweist, die in einem Einspannbereich (24) zwischen den Gehäuseteilen (16, 18) des Gehäuses (16, 18) eingespannt ist, wobei der Dichtungsträger (60) in axialer Richtung wenigstens zweiteilig ist mit einem Grundkörper (62), der fest mit der Endscheibe (44) verbunden ist, und einem Deckkörper (64), der an der Endscheibe (44) und/oder dem Grundkörper befestigt ist, und die Ringdichtung (26) zwischen dem Grundkörper (62) und dem Deckkörper (64) eingelegt ist.

7. Flüssigkeitsfilter (10) insbesondere für Kraftstoff, Öl oder Wasser Insbesondere einer Brennkraftmaschine (12) insbesondere eines Kraftfahrzeugs, mit einem Gehäuse (16, 18), welches aus wenigstens zwei voneinander trennbaren Gehäuseteilen (16, 18) zusammengesetzt ist und das wenigstens einen Einlass (34) für zu filtrierende Flüssigkeit und wenigstens einen Auslass (28) für filtrierte Flüssigkeit aufweist, und mit einem Filterelement (42) nach einem der Ansprüche 1 bis 5, welches in dem Gehäuse (16, 18) des Flüssigkeitsfilters (10) angeordnet ist, derart, dass es den Einlass (34) von der Auslass (28) des Gehäuses (16, 18) trennt, mit einem Filtermedium (48) und mit wenigstens einer Endscheibe (44), die mit dem Filtermedium (48) verbunden ist und die einen Dichtungsträger (60) für eine radial äußere Ringdichtung (26) aufweist, die in einem Einspannbereich (24) zwischen den Gehäuseteilen (16, 18) des Gehäuses (16, 18) eingespannt ist, wobei der Dichtungsträger (60) in axialer Richtung wenigstens zweiteilig ist mit einem Grundkörper (62), der fest mit der Endscheibe (44) verbunden ist, und einem Deckkörper (64), der an der Endscheibe (44) und/oder dem Grundkörper befestigt ist, und die Ringdichtung (26) zwischen dem Grundkörper (62) und dem Deckkörper (64) eingelegt ist.

## Claims

1. Filter element (42) of a liquid filter (10), in particular for fuel, oil or water, in particular of an internal combustion engine (12), in particular of a motor vehicle, that can be disposed in an at least two-part housing (16, 18) of the liquid filter (10) in such a way that it separates at least one inlet (34) of the housing (16, 18) for liquid to be filtered from an outlet (28) of the housing (16, 18) for filtered liquid, with a filter medium (48) and with at least one end disk (44) which is connected with the filter medium (48) and which features a sealing carrier (60) for a radially external annular sealing (26) that can be clamped in a clamping area (24) between two housing components (16, 18) separable from each other, wherein the sealing carrier (60) is in axial direction at least in two parts with a base body (62) firmly connected with the end disk (44), and a cover body (64) attached to the end disk (44) and/or to the base body (62) and that the annular sealing (26) is placed between the base body (62) and the cover body (64), wherein the base body (62) features a base body holding ring profile (68) with a base body holding section (72) pointing towards the cover body (64), that the cover body (64) features a cover body holding ring profile (74) with a cover body holding section (78) pointing towards the base body (62), and that the base body holding section (72) and the cover body holding section (78) encompass a holding section (82) of the annular sealing (26) in a tong-like manner.

2. Filter element according to claim 1, **characterized in that** the cover body holding ring profile (74) is connected via spoke-like disposed connecting sections (88) with a radially inner mounting ring section (90) which is for the attachment of the cover body (64) attached to the end disk (44) and/or the base body.

3. Filter element according to claim 2, **characterized in that** the cover body (64) features between the cover body holding ring profile (74) and the mounting ring section (90) at least one in particular annular support section (96) for supporting the connecting sections (88) against the end disk (44).

4. Filter element according to one of the above claims, **characterized in that** the cover body (64), in particular the mounting ring section (90), forms also at least a receptacle (94) for a radially inner annular sealing (56).

5. Filter element according to one of the above claims, **characterized in that** the cover body (64) is attached to the end disk (44) and/or the base body by means of a locking connection (104), a rotary joint and/or connector assembly, in particular a screwed or bayonet connection, a glued connection or a welded connection.

6. Liquid filter (10), in particular for fuel, oil or water, in particular of an internal combustion engine (12), in particular of a motor vehicle with a housing (16, 18) which is combined of at least two housing components (16, 18) separable from each other and that features at least one inlet (34) for liquid to be filtered and at least one outlet (28) for filtered liquid, and with a filter element (42), which is disposed in the housing (16, 18) of the liquid filter (10) in such a way that it separates the inlet (34) from the outlet (28) of the housing (16, 18), with a filter medium (48) and with at least one end disk (44) which is connected with the filter medium (48) and which features a sealing carrier (60) for a radially external annular sealing (26) which is clamped in a clamping area (24) between the housing components (16, 18) of the housing (16, 18), wherein the sealing carrier (60) is in axial direction at least in two parts with a base body (62) firmly connected with the end disk (44), and a cover body (64) attached to the end disk (44) and/or to the base body and that the annular sealing (26) is placed between the base body (62) and the cover body (64).

7. Liquid filter (10), in particular for fuel, oil or water, in particular of an internal combustion engine (12), in particular of a motor vehicle with a housing (16, 18) which is combined of at least two housing components (16, 18) separable from each other and that features at least one inlet (34) for liquid to be filtered and at least one outlet (28) for filtered liquid, and with a filter element (42) according to one of the claims 1 to 5, which is disposed in the housing (16, 18) of the liquid filter (10) in such a way that it separates the inlet (34) from the outlet (28) of the housing (16, 18), with a filter medium (48) and with at least one end disk (44) which is connected with the filter medium (48) and which features a sealing carrier (60) for a radially external annular sealing (26) which is clamped in a clamping area (24) between the housing components (16, 18) of the housing (16, 18), wherein the sealing carrier (60) is in axial direction at least in two parts with a base body (62) firmly connected with the end disk (44), and a cover body (64) attached to the end disk (44) and/or to the base body and that the annular sealing (26) is placed between the base body (62) and the cover body (64).

## Revendications

1. Élément filtrant (42) d'un filtre à liquide (10), notamment pour du carburant, de l'huile ou de l'eau, notamment d'un moteur à combustion interne (12), notamment d'un véhicule automobile, qui peut être disposé dans un boîtier (16, 18) au moins constitué de deux parties du filtre à liquide (10) de sorte qu'il sépare au moins une entrée (34) du boîtier (16, 18) pour le liquide à filtrer d'une sortie (28) du boîtier (16, 18) pour le liquide filtré, avec un milieu filtrant (48) et avec au moins un disque d'extrémité (44) qui est relié au milieu filtrant (48) et qui est pourvu d'un porte-joint (60) pour un joint annulaire (26) radial extérieur qui peut être serré dans une section de serrage (24) entre deux parties (16, 18) du boîtier séparables l'une de l'autre, le porte-joint (60) étant constitué d'au moins deux parties en sens axial constituées d'un corps de base (62) qui est relié de manière fixe au disque d'extrémité (44) et d'un corps de recouvrement (64) qui est fixé au disque d'extrémité (44) et/ou au corps de base (62), le joint annulaire (26) étant logé entre le corps de base (62) et le corps de recouvrement (64), le corps de base (62) présentant un profilé annulaire de retenue du corps de base (68) avec une section de retenue du corps de base (72) qui est dirigée vers le corps de recouvrement (64), le corps de recouvrement (64) présentant un profilé annulaire de retenue du corps de recouvrement (74) avec une section de retenue du corps de recouvrement (78) qui est dirigée vers le corps de base (62) et la section de retenue du corps de base (72) et la section de retenue du corps de recouvrement (78) enveloppant à la façon d'une pince une section de retenue (82) du joint annulaire (26).

2. Élément filtrant selon la revendication 1, **caractérisé en ce que** le profilé annulaire de retenue du corps de recouvrement (74) est relié, par l'intermédiaire de sections de liaison (88) disposées comme des rayons, à une section annulaire de fixation (90) radiale intérieure qui est fixée, à des fins de fixation du corps de recouvrement (64), au disque d'extrémité (44) et/ou au corps de base.

3. Élément filtrant selon la revendication 2, **caractérisé en ce que** le corps de recouvrement (64) présente entre le profilé annulaire de retenue du corps de recouvrement (74) et la section annulaire de fixation (90) au moins une section d'appui (96) notamment annulaire servant d'appui aux sections de jonction (88) contre le disque d'extrémité (44).

4. Élément filtrant selon l'une des revendications précédentes, **caractérisé en ce que** le corps de recouvrement (64), notamment la section annulaire de fixation (90), présente aussi au moins un logement (94) pour un joint annulaire (56) radial intérieur.

5. Élément filtrant selon l'une des revendication précédentes, **caractérisé en ce que** le corps de recouvrement (64) est fixé au moyen d'un raccord à crans (104), d'un raccord rotatif et/ou d'un raccord enfichable, notamment d'un raccord vissé ou d'un raccord à baïonnette, d'une liaison collée ou d'une liaison soudée, au disque d'extrémité (44) et/ou au corps de base.

6. Filtre à liquide (10), notamment pour du carburant, de l'huile ou de l'eau, notamment d'un moteur à combustion interne (12), notamment d'un véhicule automobile, avec un boîtier (16, 18) constitué d'au moins deux parties (16, 18) séparables l'une de l'autre et présentant au moins une entrée (34) pour le liquide à filtrer et au moins une sortie (28) pour le liquide filtré, et avec un élément filtrant (42), qui est disposé dans le boîtier (16, 18) du filtre à liquide (10) de sorte qu'il sépare l'entrée (34) de la sortie (28) du boîtier (16, 18), avec un milieu filtrant (48) et avec au moins un disque d'extrémité (44) qui est relié au milieu filtrant (48) et qui est pourvu d'un porte-joint (60) pour un joint annulaire (26) radial extérieur qui est serré dans une section de serrage (24) entre les parties (16, 18) du boîtier (16, 18), le porte-joint (60) étant constitué d'au moins deux parties en sens axial constituées d'un corps de base (62) qui est relié de manière fixe au disque d'extrémité (44) et d'un corps de recouvrement (64) qui est fixé au disque d'extrémité (44) et/ou au corps de base, et le joint annulaire (26) étant logé entre le corps de base (62) et le corps de recouvrement (64).

7. Filtre à liquide (10), notamment pour du carburant, de l'huile ou de l'eau, notamment d'un moteur à combustion interne (12), notamment d'un véhicule automobile, avec un boîtier (16, 18) constitué d'au moins deux parties (16, 18) séparables l'une de l'autre et présentant au moins une entrée (34) pour le liquide à filtrer et au moins une sortie (28) pour le liquide filtré, et avec un élément filtrant (42) selon l'une des revendications 1 à 5, qui est disposé dans le boîtier (16, 18) du filtre à liquide (10) de sorte qu'il sépare l'entrée (34) de la sortie (28) du boîtier (16, 18), avec un milieu filtrant (48) et avec au moins un disque d'extrémité (44) qui est relié au milieu filtrant (48) et qui est pourvu d'un porte-joint (60) pour un joint annulaire (26) radial extérieur qui est serré dans une section de serrage (24) entre les parties (16, 18) du boîtier (16, 18), le porte-joint (60) étant constitué d'au moins deux parties en sens axial constituées d'un corps de base (62) qui est relié de manière fixe au disque d'extrémité (44) et d'un corps de recouvrement (64) qui est fixé au disque d'extrémité (44) et/ou au corps de base, et le joint annulaire (26) étant logé entre le corps de base (62) et le corps de recouvrement (64).
